Europäisches Patentamt

European Patent Office

Office européen des brevets

(11) Veröffentlichungsnummer: **0 326 650**
**A1**

(12) # EUROPÄISCHE PATENTANMELDUNG

(21) Anmeldenummer: 88116603.7

(51) Int. Cl.4: **A47J 43/22**

(22) Anmeldetag: 07.10.88

(30) Priorität: 04.02.88 DE 8801555 U

(43) Veröffentlichungstag der Anmeldung:
09.08.89 Patentblatt 89/32

(84) Benannte Vertragsstaaten:
AT CH DE FR GB IT LI

(71) Anmelder: H. Zenker GmbH + Co. KG
Industriegelände Nord
D-8890 Aichach(DE)

(72) Erfinder: Falerni, Cesare
Via Roncaglio 20
IT-22040 Civate (Co)(IT)

(74) Vertreter: Ninnemann, Detlef, Dipl.-Ing.
Patentanwalt
Delbrückstrasse 8
D-2800 Bremen 1(DE)

(54) Haushaltssieb.

(57) Haushaltssieb mit einem gewölbten und an einem Rahmen 2 befestigten Siebgewebe 1 und einem vom Rahmen 2 abstehenden Handgriff 3. Das gewölbte Siebgewebe 1 weist eine mit dem Rahmen 2 verbundene Siebwand 11 und einen abgeflachten Siebboden 12 auf. Der Handgriff 3 ist derart gebogen, daß seine Höhe gleich der Höhe der Siebwand 11 ist. Der abgeflachte Siebboden 12 ist nur so groß, daß die Standsicherheit des Siebes nur in Verbindung mit dem abgebogenen Ende 32, 33, 34 des Handgriffes 3 gegeben ist.

FIG.1

EP 0 326 650 A1

## Haushaltssieb

Die Erfindung betrifft ein Haushaltssieb der im Oberbegriff des Anspruchs 1 genannten Art.

Aus dem DE-GM 16 92 577 ist ein Rund- oder Ovalsieb bekannt, das aus einem mit einem Handgriff versehenen und ein Siebgewebe tragenden Rahmen besteht. Der Rahmen weist einen gebogenen Draht auf, an dem die Kante des Siebgewebes mittels einer den Draht und diese Kante überdeckenden Blechrinne befestigt ist. Zusätzlich ist der Rahmen mit Auflageelementen versehen, die aus dem Rahmen herausgebogen sind und in Verbindung mit dem Handgriff zum Auflegen bzw. Halten des Rund- oder Ovalsiebes auf dem Rand einer Schüssel, eines Topfes oder dergleichen dienen.

Infolge der Wölbung des Siebgewebes kann das bekannte Rund- oder Ovalsieb auf einer ebenen Unterlage nicht stabil so abgestellt werden, daß der Rahmen etwa parallel zur Unterlage verläuft, um so ein Befüllen des Siebes zu ermöglichen, ohne daß das Sieb in einen oben offenen Behälter eingehängt wird.

Aus der DE-C-834 444 ist ein Kaffee- oder Teesieb mit einer Absetz- bzw. Fangschale bekannt, die über einen Federbügel miteinander verbunden sind, wobei die Federschenkel mit Stützfüßen versehen sind. Die Stützfüße des bekannten Kaffee- oder Teesiebes dienen dazu, den waagerechten Stand des Siebes aufgrund der Länge des Handgriffes sowie des Federmechanismus zu gewährleisten, da ansonsten in der Fangschale befindliche Flüssigkeit auslaufen würde. Bei dem bekannten Sieb sind die Stützfüße jedoch nur aufgrund des langen Handgriffes erfoderlich, da die Standsicherheit des Siebes durch die abgeflachte Absetz- bzw. Fangschale allein gewährleistet wäre.

Aus dem DE-U-7435 580 ist ein Kochsieb für Teigwaren bekannt, das ein kegelstumpfartiges Drahtgeflecht oder Kunststoffnetz mit einem Abstellring aufweist. Die Stellfläche ist bei dem bekannten Nudel- und Kochsieb so groß, daß die Standsicherheit des Siebes für sich betrachtet bereits gewährleistet ist, ohne daß eine zusätzliche Abstützung über den Handgriff des Siebes erfolgt. Nachteilig ist dabei jedoch, daß bei vorgegebenem Siebdurchmesser infolge der starken Abflachung nur eine geringe Menge zu bearbeitenden Gutes von dem Sieb aufgenommen werden kann und daß die eigentliche Siebfläche stark reduziert ist.

Aufgabe der vorliegenden Erfindung ist es, ein Haushaltssieb der eingangs genannten Art zu schaffen, das zum Befüllen wahlweise in einen Behälter einsetzbar oder auf einer Unterfläche in stabiler Lage abstellbar ist und dessen Siebfläche bei vorgegebenem Siebdurchmesser eine optimale Größe aufweist.

Diese Aufgabe wird durch das kennzeichnende Merkmal des Anspruchs 1 gelöst.

Die erfindungsgemäße Lösung ermöglicht es, das Haushaltssieb zum Befüllen mit Obst, Gemüse oder dergleichen wahlweise in einen offenen Behälter einzusetzen oder auf einer Unterlage abzustellen, wobei eine stabile Lage des Haushaltssiebes sowohl durch den abgeflachten Siebboden als auch durch den auf die Höhe des Siebbodens heruntergezogenen Handgriff gewährleistet ist. Gleichzeitig ist ein maximales Füllvolumen bei gegebenem Rahmendurchmesser zum Füllen und Sieben sichergestellt. Darüberhinaus gewährleistet die erfindungsgemäße Lösung eine optimale Siebfläche zur Aufnahme zu bearbeitenden Gutes bei vorgegebenem Sieb durchmesser, da die Abflachung des Siebes nur einen Teil der Standsicherheit bewirkt, so daß die Abflachung eine minimale Größe aufweisen kann.

In einer vorteilhaften Weiterbildung der Erfindung weist das Haushaltssieb zwei vom Rahmen abstehende und gegenüber dem Handgriff angeordnete Auflageelemente auf. Dadurch kann das Haushaltssieb zum Befüllen wahlweise in einen oben offenen Behälter eingehängt oder auf einer Unterfläche in stabiler Lage abgestellt werden.

Nach einer vorteilhaften Ausgestaltung der erfindungsgemäßen Lösung weist das Sieb eine ovale Form auf, wobei die Längsachse senkrecht zur Richtung des Handgriffes verläuft. Durch eine entsprechend ovale Abflachung wird eine maximale Länge der Abflachung in Richtung senkrecht zur Erstreckung des Handgriffes ermöglicht und somit eine erhöhte Standsicherheit gewährleistet.

In einer vorteilhaften Weiterbildung der Erfindung weist der Handgriff einen in der Ebene des Rahmens verlaufenden Abschnitt und einen gebogenen Abschnitt auf, dessen Höhe gleich der Höhe der Siebwand ist. Durch diese Ausgestaltung des Handgriffes ist eine große Griffläche bzw. -länge gegeben und gleichzeitig der Beitrag des Handgriffes zur Erhöhung der Standsicherheit des Siebes gewährleistet.

In einer weiteren vorteilhaften Ausgestaltung schließt sich an den gebogenen Abschnitt des Handgriffes ein in der Ebene des Siebbodens liegender gerader Abschnitt an, der wahlweise nach innen oder außen abgewinkelt sein kann. Diese zusätzliche Maßnahme steigert die Standsicherheit des Siebes und ermöglicht es darüberhinaus, in dem geraden Abschnitt nach einem weiteren Merkmal der Erfindung eine Aussparung in dem Handgriff vorzusehen, mittels der das Haushaltssieb an einem Haken aufgehängt werden kann.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 eine perspektivische Ansicht des Haushaltssiebes mit abgeflachtem Siebboden und gebogenen Handgriff;

Figur 2 eine Draufsicht auf das Haushaltssieb gemäß Figur 1;

Figur 3 eine Seitenansicht des Haushaltssiebes gemäß den Figuren 1 und 2;

Figur 4 eine Seitenansicht eines Haushaltssiebes mit abgeflachtem Siebboden und einem als Standfläche ausgebildeten, nach außen abgewinkelten Abschnitt des Handgriffes und

Figur 5 eine Seitenansicht eines Haushaltssiebes mit abgeflachtem Siebboden und einem als Standfläche ausgebildeten, nach innen abgewinkelten Abschnitt des Handgriffes.

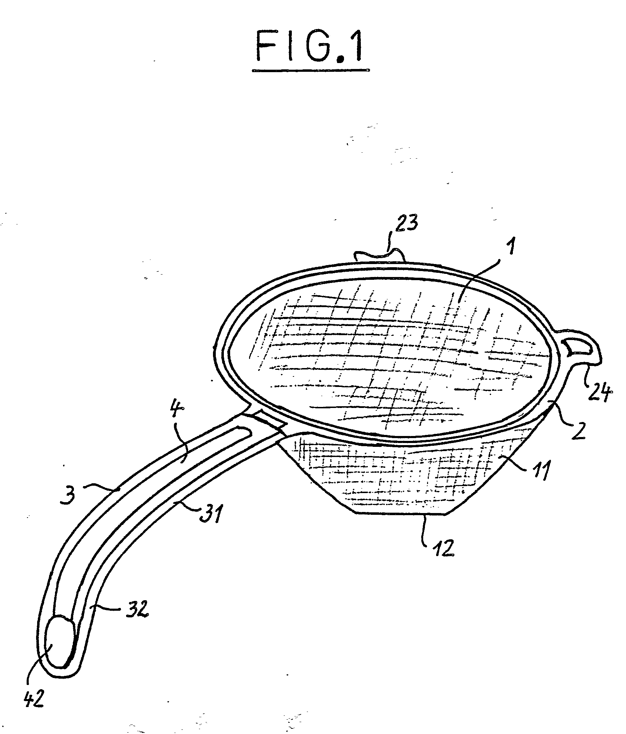

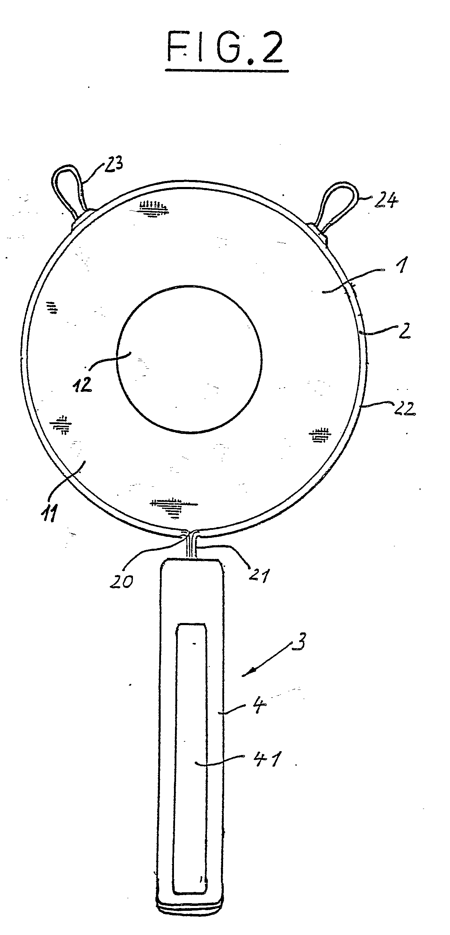

In den Figuren 1 bis 3 ist in perspektivischer Ansicht, in Draufsicht bzw. in Seitenansicht ein rundes Haushaltssieb dargestellt, das aus einem Siebgewebe 1 und einem den oberen Rand des Siebgewebes 1 einfassenden Rahmen 2 besteht. Das Siebgewebe kann aus einem formstabilen Draht- oder Kunststoffgewebe oder einem gestanzten Lochblech bestehen.

Der Rahmen 2 besteht vorzugsweise aus einem entsprechend gebogenen Draht 21, an dem die Kante des Siebgewebes 1 mittels eines den Draht 21 und die Kante des Siebgewebes 1 überdeckenden Umbördelungsbleches 22 befestigt ist. Alternativ hierzu kann der Rahmen 2 aus einem Kunststoff- oder Metallring mit eingelassener Oberkante des Siebgewebes 1 bestehen.

Der Rahmen 2 ist mit zwei Auflageelementen 23, 24 versehen, die bspw. dadurch gebildet werden können, daß der Draht 21 in entsprechender Weise an den Stellen der Auflageelemente 23, 24 schlingenförmig ausgebogen ist.

Zusätzlich ist der Rahmen 2 mit einem Handgriff 3 versehen, der bspw. als Drahtschlinge ausgebildet sein kann, die an der stelle 20 aus dem das Siebgewebe 1 aufnehmenden Rahmen 2 herausgebogen ist. Der Handgriff 3 weist zusätzlich ein Formteil 4 aus Holz, Kunststoff oder Metall auf, das wahlweise in die den Handgriff 3 bildende Drahtschlinge eingesetzt ist oder die Drahtschlinge umfaßt, wobei deren äußere Form beliebig gestaltbar ist. Das Formteil 4 ist zur besseren Handhabung mit einer Längsmulde 41 versehen, in der bspw. der Daumen eines Benutzers ruhen kann. Zusätzlich ist das Formteil 4 mit einer Aussparung 42 ver sehen, mittels der das Haushaltssieb an einem Haken aufgehängt werden kann.

Erfindungsgemäß besteht das gewölbte Siebgewebe 1 aus einer mit dem Rahmen 2 verbundenen Siebwand 11 und einem abgeflachten Siebboden 12. Die Größe des abgeflachten Siebbodens ist dabei so bemessen, daß die Standsicherheit des Siebes in Verbindung mit dem heruntergezogenen Handgriff gewährleistet ist. Sie ist so zu bemessen, daß die sich senkrecht zum Handgriff erstreckende Richtung der Abflachung ausreichend ist, ein Umkippen des Siebes zu verhindern. Dadurch wird gewährleistet, daß bei vorgegebenem Siebdurchmesser eine maximale Menge zu befüllenden Gutes aufgenommen und gleichzeitig die Standsicherheit des Siebes gewährleistet werden kann.

Der abgeflachte Siebboden 12 kann parallel zum Rahmen 2 oder um einen geringen Winkel gegenüber dem Rahmen 2 geneigt sein. Dadurch ergibt sich die Möglichkeit eines licht schrägen Aufstellens des Haushaltssiebes zu dessen erleichtertem Befüllen bspw. aus einer Sitzposition heraus.

In dem dargestellten Ausführungsbeispiel ist der Rahmen 2 kreisförmig und die Siebwand 11 als Kugelschicht ausgebildet. Alternativ hierzu kann die Siebwand 11 auch als Kegelstumpf ausgebildet sein.

In einer bevorzugten Ausführungsform ist der Rahmen 2 oval oder ellipsenförmig und die Siebwand 11 ellipsoidförmig ausgebildet. Die große Achse des abgeflachten Siebbodens 12 ist dabei im wesentlichen senkrecht zur Richtung des Handgriffes 3 angeordnet.

Der Handgriff 3 besteht in dem in den Figuren 1 bis 3 dargestellten Ausführungsbeispiel aus einem in der Ebene des Rahmens 2 verlaufenden Abschnitt 31 und einem gebogenen Abschnitt 32, wobei der gebogene Abschnitt 32 so weit heruntergezogen ist, daß die Höhe des gebogenen Abschnittes 32 gleich der Höhe der Siebwand 11 zuzüglich der Rahmenhöhe ist. Dadurch ist ein ebenes Aufstellen des Haushaltssiebes möglich, wobei durch den heruntergezogenen Handgriff 3 die Stabilität des Haushaltssiebes beim Aufstellen auf einer ebenen Unterfläche deutlich erhöht wird.

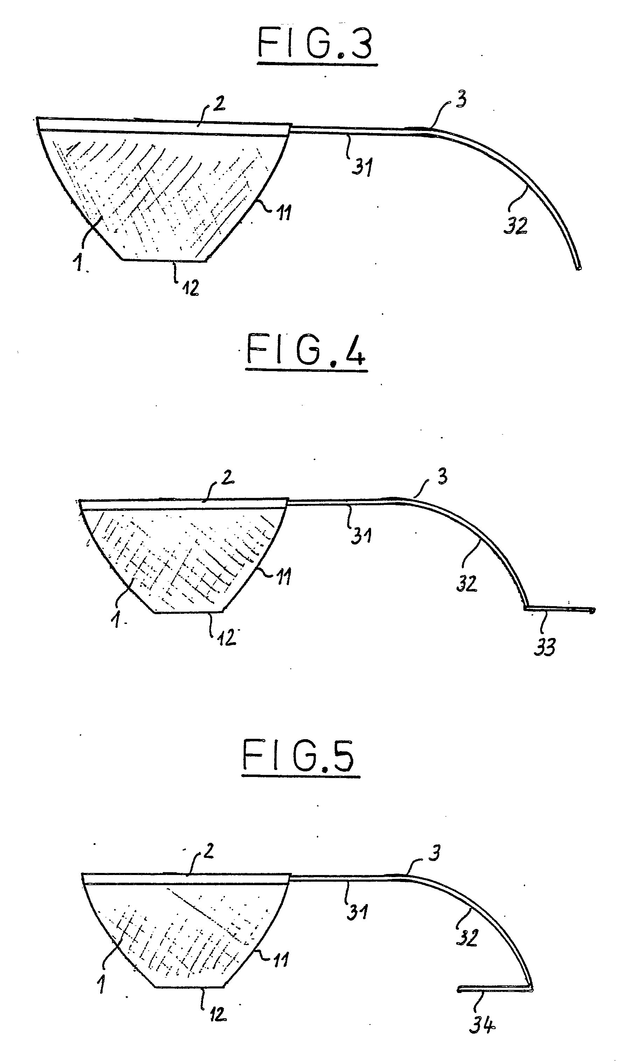

Eine weitere Erhöhung der Standfestigkeit des Haushaltssiebes beim Abstellen auf einer ebenen Unterfläche wird dadurch erzielt, daß sich gemäß den Figuren 4 und 5 an den gebogenen Abschnitt 32 ein parallel zum in der Ebene des Rahmens 2 liegenden Abschnitt 31 verlaufender gerader Abschnitt 33 bzw. 34 anschließt, der wahlweise nach außen oder innen gebogen sein kann. Gleichzeitig kann dieser gerade Abschnitt 33 bzw. 34 mit einer Aussparung analog der Aussparung 44 gemäß den Figuren 1 bis 3 versehen sein, mittels der das Haushaltssieb an einem Haken aufgehängt werden kann.

Alternativ hierzu kann der Handgriff 3 S-förmig gebogen sein.

Vorzugsweise besteht das Siebgewebe 1, der Rahmen 2 und der Handgriff 3 aus rostfreiem Stahl oder verzinntem Metall bzw. Drahtgewebe, wodurch ein hochwertiges Haushaltssieb mit wesentlich gesteigerter Lebensdauer geschaffen wird.

Die Erfindung beschränkt sich in ihrer Ausführung nicht auf das vorstehend angegebene bevorzugte Ausführungsbeispiel. Vielmehr ist eine Anzahl von Varianten denkbar, welanders gearteten Ausführungen Gebrauch machen.

**Ansprüche**

1. Haushaltssieb mit einem gewölbten und an einem Rahmen befestigten Siebgewebe, das eine mit dem Rahmen verbundene Siebwand und einen abgeflachten Siebboden aufweist, und mit einem vom Rahmen abstehenden Handgriff, **dadurch gekennzeichnet, daß** der Handgriff (3) derart gebogen ist, daß seine Höhe gleich der Höhe der Siebwand (11) ist, und daß der abgeflachte Siebboden (12) nur so groß ist, daß die Standsicherheit des Siebes nur in Verbindung mit dem abgebogenen Ende (32, 33, 34) des Handgriffes (3) gegeben ist.

2. Haushaltssieb nach Anspruch 1, **dadurch gekennzeichnet, daß** der Rahmen (2) kreisförmig und die Siebwand (11) als Kugelschicht oder Kegelstumpf ausgebildet ist.

3. Haushaltssieb nach Anspruch , **dadurch gekennzeichnet, daß** der Rahmen (2) oval oder ellipsenförmig und die Siebwand (11) ellipsoidförmig ausgebildet ist, und daß die große Achse des abgeflachten Siebbodens (12) im wesentlichen senkrecht zur Richtung des Handgriffes (3) angeordnet ist.

4. Haushaltssieb nach einem der vorangehenden Ansprüche, **gekennzeichnet durch** zwei vom Rahmen (2) abstehende und gegenüber dem Handgriff (3) angeordnete Auflageelemente (23, 24).

5. Haushaltssieb nach einem der vorangehenden Ansprüche, **dadurch gekennzeichnet, daß** de abgeflachte Siebboden (12) parallel zum Rahmen (2) verläuft.

6. Haushaltssieb nach einem der vorangehenden Ansprüche, 1 bis 3, **dadurch gekennzeichnet, daß** der abgeflachte Siebboden (12) unter einem stumpfen Winkel gegenüber dem Rahmen (2) geneigt verläuft.

7. Haushaltssieb nach einem der vorangehenden Ansprüche, **dadurch gekennzeichnet, daß** der Handgriff (3) einen in der Ebene des Rahmens (2) verlaufenden Abschnitt (31) und einen gebogenen Abschnitt (32) aufweist, dessen Höhe gleich der Höhe der Siebwand (11) ist. (Fig. 3)

8. Haushaltssieb nach Anspruch 7, **dadurch gekennzeichnet, daß** sich an den gebogenen Abschnitt (32) des Handgriffs (3) ein in der Ebene des Siebbodens (12) liegender, als Standfläche ausgebildeter gerader Abschnitt (33, 34) anschließt, der nach außen oder nach innen abgewinkelt ist.

9. Haushaltssieb nach einem der Ansprüche 1 bis 7, **dadurch gekennzeichnet, daß** der Handgriff (3) S-förmig gebogen ist.

10. Haushaltssieb nach einem der vorangehenden Ansprüche, **dadurch gekennzeichnet, daß** der Handgriff (3) aus einer gebogenen Drahtschlinge besteht, in die ein Formteil (4) eingelegt ist oder die Drahtschlinge umfaßt und daß das Formteil (4) im gebogenen Abschnitt (32) oder in dem an diesen anschließenden geraden Abschnitt (33, 34) des Handgriffs (3) eine Ausnehmung (42) aufweist.

11. Haushaltssieb nach einem der vorangehenden Ansprüche, **dadurch gekennzeichnet, daß** der Rahmen (2) und/oder das Siebgewebe (1) und/oder der Handgriff (3) aus rostfreiem Stahl oder aus verzinntem Metall sind.

# FIG.1

# FIG.2

## FIG.3

## FIG.4

## FIG.5

Europäisches
Patentamt

**EUROPÄISCHER RECHERCHENBERICHT**

Nummer der Anmeldung

EP 88 11 6603

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2507500 (CHESTER) <br> * Spalte 3, Zeile 10 - Zeile 17; Figuren 1, 3, 4 * | 1 | A47J43/22 |
| A | DE-B-1040763 (V. D. CRONE) <br> * Figuren 1-4 * | 1 | |
| A | US-A-4138341 (ADAMS) <br> * Figur 1 * | 1 | |
| A | US-A-4126555 (ADAMS) <br> * das ganze Dokument * | 1 | |
| A | DE-B-1268337 (SCHABER) <br> * Figuren 1, 3 * | 1 | |
| D,A | DE-C-834444 (EICHE) | | |
| D,A | DE-U-7435580 (THOENE) | | |
| D,A | DE-U-1692577 (WEISS) | | |

**RECHERCHIERTE SACHGEBIETE (Int. Cl.4)**

A47J
B07B

Der vorliegende Recherchenbericht wurde für alle Patentansprüche erstellt

| Recherchenort | Abschlußdatum der Recherche | Prüfer |
|---|---|---|
| DEN HAAG | 12 MAI 89 | SCHARTZ J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)